Europäisches Patentamt

European Patent Office

Office européen des brevets

(11) Veröffentlichungsnummer: **0 385 135**
**A1**

(12) **EUROPÄISCHE PATENTANMELDUNG**

(21) Anmeldenummer: **90102238.4**

(22) Anmeldetag: **05.02.90**

(51) Int. Cl.5: **G01J 1/42, G02B 6/06**

(30) Priorität: **28.02.89 DE 3906262**

(43) Veröffentlichungstag der Anmeldung:
**05.09.90 Patentblatt 90/36**

(84) Benannte Vertragsstaaten:
**BE CH DE FR GB IT LI NL**

(71) Anmelder: **Siemens Aktiengesellschaft**
**Wittelsbacherplatz 2**
**D-8000 München 2(DE)**

(72) Erfinder: **Doemens, Günter, Dr.**
**Eichenfeldstrasse 4**
**D-8150 Holzkirchen(DE)**
Erfinder: **Schneider, Richard, Dr.**
**Egerländer Strasse 5**
**D-8028 Taufkirchen(DE)**

(54) **Positionsempfindlicher Fotodetektor.**

(57) Die Erfindung betrifft einen positonsempfindlichen Fotodetektor zur Erfassung der ortsbezogenen Intensitätsverteilung von einer auf einer Empfängerfläche erzeugten Abbildung, wie er insbesondere für die LaserTriangulation verwendet werden kann. Durch die Trennung von Empfängerfläche (2) und optoelektronischen Wandlern (3) durch zwischengeschaltete Lichtleiter (1) und durch das Vorhandensein einer Vielzahl von Lichtleitern innerhalb einer Empfängerfläche (2) wird eine hochaufgelöste Verarbeitung einer auf der Empfängerfläche (2) vorhandenen Abbildung, beispielsweise einem Lichtfleck (6) bei gleichzeitiger Auslesung mittels sämtlicher Lichtleiter 1.1 bis 1.n von der Empfängerfläche ermöglicht. Somit ist eine parallele Verarbeitung der in jedem Element innerhalb der Empfängerfläche (2) gleichzeitig vorhandenen Signale, wie beispielsweise dem Lichtfleck (6), ohne Verzögerung möglich. Die örtliche Zuordnung richtet sich auf die detektorbezogene Koordinatenrichtung (X).

FIG 1

## Positionsempfindlicher Fotodetektor

Die Erfindung betrifft einen positionsempfindlichen Fotodetektor zur schnellen Erfassung der ortsbezogenen Intensitätsverteilung von einer auf einer Empfängerfläche erzeugten Abbildung.

Mit der zunehmenden Miniaturisierung der Strukturen von Leiterplatten erhält die Prüfung und die Erkennung von Fehlern an diesen Bauteilen eine immer größere Bedeutung. Hierbei ist die visuelle Kontrolle längst überholt. Die heutigen automatisierten Verfahren sind zum größten Teil optische Inspektionssysteme, die mit zweidimensionaler Bildauswertung arbeiten. Zur Prüfung von Strukturen, die im Bereich von $10^{-5}$ m liegen, kommt es sowohl auf eine hohe Auflösungsfähigkeit in ebener, als auch in dreidimensionaler Form an. Eine Möglichkeit der Erfassung von Oberflächenstrukturen ist die Abtastung der Oberfläche mittels Laser-Triangulation. Hierbei wird der von einer Lasereinheit erzeugte optische Taststrahl von einem ortsauflösenden Empfänger aufgenommen. Derartige optische Empfänger werden als positonsempfindliche Fotodetektoren bezeichnet. Die unter diesem Begriff erhältlichen Bauteile sind beispielsweise Diodenzeilen oder sogenannte Lateralfotodioden. Bei diesen Bauteilen kann das Auslesen von Informationen meist seriell und nur teilweise parallel geschehen, bzw. es ist nur der Schwerpunkt der Abbildung detektierbar.

Der Erfindung liegt die Aufgabe zugrunde, einen positionsempfindlichen Fotodetektor zur Verfügung zu stellen, der die ortsbezogene Intensitätsverteilung einer auf seiner Empfängerfläche erzeugten Abbildung verzögerungsfrei und mit hoher Auflösung ermittelt.

Die Lösung dieser Aufgabe geschieht durch einen Fotodetektor, der aus einer Vielzahl von Lichtleitern besteht, die als optische Querschnittswandler ausgebildet sind und der optoelektronische Wandler in gleicher Anzahl wie die vorhandenen Lichtleiter aufweist, wobei dessen Empfängerfläche durch die Stirnflächen der geordnet gebündelten einseitig annähernd rechteckigen Enden der Lichtleiter gebildet wird und die entgegengesetzten annähernd runden Enden der Lichtleiter jeweils an entsprechend den Lichtleitern geordneten optoelektronischen Wandlern angeschlossen sind und die elektrischen Signale der optoelektronischen Wandler gleichzeitig an einer Auswerteeinheit übergeben werden.

Der Erfindung liegt die Erkenntnis zugrunde, daß die Trennung von optischer Empfängerfläche und elektrischem Signal zum einen die komplette Parallelschaltung der vorhandenen Lichtleiter mit deren zugeordneten optoelektronischen Wandlern ermöglicht, und zum anderen eine hohe Differenzierbarkeit bezüglich der Intensitätsverteilung ermöglicht. Hierbei wird die Vielzahl der vorhandenen Lichtleiter, die durch ihre geordnete einseitige Bündelung der annähernd rechteckigen Enden eine Art eindimensionales Raster darstellen, zu einer hohen Auflösung ausgenutzt. Dieses Prinzip bleibt beim Übergang von den Lichtleitern auf die optoelektronischen Wandler erhalten, so daß die elektrischen Signale dieser Bauelemente ebenfalls parallel, also zeitgleich an eine Auswerteeinheit übergebbar sind.

Eine besondere Ausgestaltung der Erfindung sieht vor, daß die Empfängerfläche in Form einer Treppe ausgebildet ist. Um den bei Triangulationsverfahren nachteiligen Scheimpflug-Effekt zu kompensieren, wird, ohne die Ausrichtung der Empfängerfläche zu verändern, die Bündelung der Lichtleiter derart vorgenommen, daß eine treppenförmige Struktur entsteht, die bei seitlicher Betrachtung der Empfängerfläche sichtbar ist. Hierbei sind die Stirnflächen der Lichtwellenleiter innerhalb der Empfängerfläche gleichmäßig jeweils in gleicher Richtung im Verhältnis zur benachbarten Stirnfläche versetzt angeordnet. Dies hat den vorteilhaften Effekt, daß bei gleichzeitiger Gewährleistung einer scharfen Abbildung auf der Empfängerfläche das Licht trotzdem zumindest annähernd senkrecht auf die Lichtleiter auftrifft und somit mit einem hohen Wirkungsgrad eingekoppelt wird.

Eine weitere vorteilhafte Ausgestaltung der Erfindung sieht den Einsatz von mindestens zwei Empfängerflächen vor, womit bei entsprechender Anordnung in einem Triangulationsverfahren Fehlmessung durch Abschattung eliminiert werden können. Die dem kennzeichnenden Teil des Anspruches 3 entnehmbare Ausgestaltung hat den besonderen Vorteil, daß die Anzahl der optoelektronischen Wandler nur der einfachen Anzahl der vorhandenen Lichtleiter innerhalb einer Empfängerfläche entspricht.

Im folgenden wird anhand von schematischen Figuren ein Ausführungsbeispiel beschrieben.

In der Figur 1 ist ein positionsempfindlicher Fotodetektor mit einer Empfängerfläche 2 dargestellt.

In der Figur 2 ist eine treppenförmig aufgebaute Empfängerfläche 2 skizziert.

In der Figur 3 ist ein positionsempfindlicher Fotodetektor mit zwei Empfängerflächen 2 dargestellt.

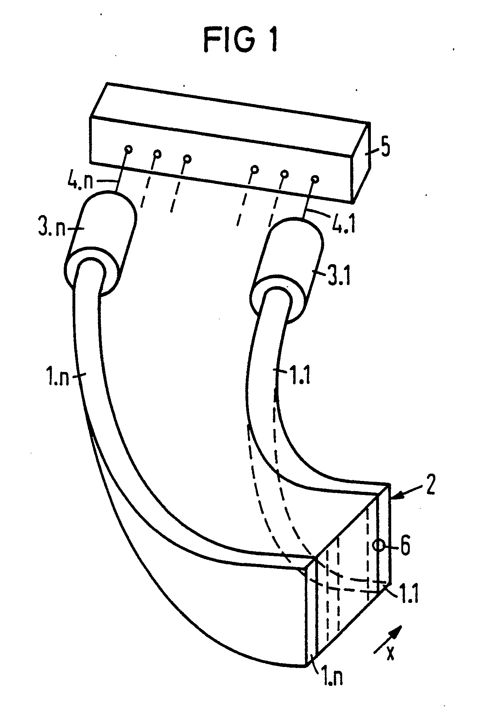

Die Figur 1 zeigt die Lichtleiter 1.1 und 1.n, wobei die restlichen Lichtleiter 1.2 bis 1.n-1 zwischen den beiden erstgenannten liegen. Die optoelektronischen Wandler 3.1 bis 3.n sowie die elektrischen Anschlüsse 4.1 bis 4.n sind den Lichtleitern 1.1 bis 1.n entsprechend zugeordnet und die Elemente sind untereinander gekoppelt bzw. verschaltet. Dieser Darstellung ist direkt zu entnehmen, daß eine beispielsweise durch einen Lichtfleck 6 dargestellte Abbildung auf der Empfängerfläche 2 ohne eine teilweise oder komplette serielle Abfrage der Lichtleiter 1.1 bis 1.n geschehen kann. So wie in der Figur 1 dargestellt wird der Lichtfleck 6 direkt durch die Lichtleiter 1.1 und 1.2 über die entsprechenden optoelektronischen Wandler 3.1 und 3.2, sowie deren zugehörige elektrische Anschlüsse an die Auswerteeinheit 5 übermittelt. Da sämtliche Lichtleiter 1 parallel geschaltet sind und entsprechend parallel abgefragt werden können ergeben sich keinerlei Verzögerung durch serielles Auslesen. Bezogen auf den Detektor kann eine Koordinatenrichtung X angegeben werden, unter deren Berücksichtigung innerhalb der Auswerteeinheit 5 die Lage und die eindimensionale Ausdehnung einer Abbildung, beispielsweise eines Lichtfleckes 6, feststellbar ist.

Die praktische Ausführung eines der in Figur 1 entsprechenden positionsempfindlichen Fotodetektors sieht den Einsatz von lichtleitenden Folien als Lichtleiter 1 vor. Die Folie kann beispielsweise als Rechteck vorliegen, wobei sie einseitig innerhalb der Empfängerfläche 2 ihre ursprüngliche Form behält und an der anderen Seite entsprechend dem nötigen Anschluß an den optoelektronischen Wandler 3 geformt wird. Diese Formung ist in der Regel ein Kreis. Hierbei ist jedoch gewährleistet, daß der Querschnitt von der Empfängerfläche 2 bis zu den optoelektronischen Wandlern 3 konstant bleibt. Eine andere Gestaltung von Lichtleitern 1 wäre beispielsweise die Bündelung bzw. Aneinanderreihung von Lichtleitfasern, die in der Regel kreisförmige Ausbildung aufweisen. Dieses Gebilde wird auf der einen Seite innerhalb der Empfängerfläche 2 eine lineare parallele Schichtung der Lichtleitfasern und auf der anderen Seite in Richtung der optoelektronischen Wandler 3 eine annähernd kreisförmige Bündelung beinhalten. Ein wesentlicher Nachteil bei dieser Ausführung wird jedoch die nicht komplett ausgebildete Empfängerfläche sein, da bei parallel nebeneinander liegenden Lichtleitfasern, deren Stirnflächen alle in einer Ebene liegen, zwischen den als Kreise zu erkennenden Stirnflächen immer bestimmte Flächen ausgespart bleiben, die zur Detektion einer Abbildung nicht herangezogen werden.

Als optoelektronischer Wandler werden vorzugsweise Avalanche-Dioden eingesetzt.
Die Anzahl der vorhandenen Lichtleiter 1.1 bis 1.n liegt bei 30 bis 100. Damit sind beispielsweise 30 bis 100 Höhenschritte auswertbar, wenn der positionsempfindliche Fotodetektor zur Auswertung der Höhe einer Oberflächenstruktur herangezogen wird. Damit ist eine hohe Auflösungsfähigkeit bei der Erkennung von dreidimensionalen Oberflächenkoordinaten mittels des Laser-Triangulationsverfahrens möglich. Ein wesentlicher Vorteil gegenüber einem herkömmlichen System beispielsweise mit einer Diodenzeile liegt also darin, eine wesentlich höhere Differenzierung und zugleich eine höhere Verarbeitungsgeschwindigkeit zu erhalten. Hier ist beispielsweise eine Steigerung von $10^5$ Pixel/sec. auf $10^6$ bis $10^7$ Pixel/sec. möglich.

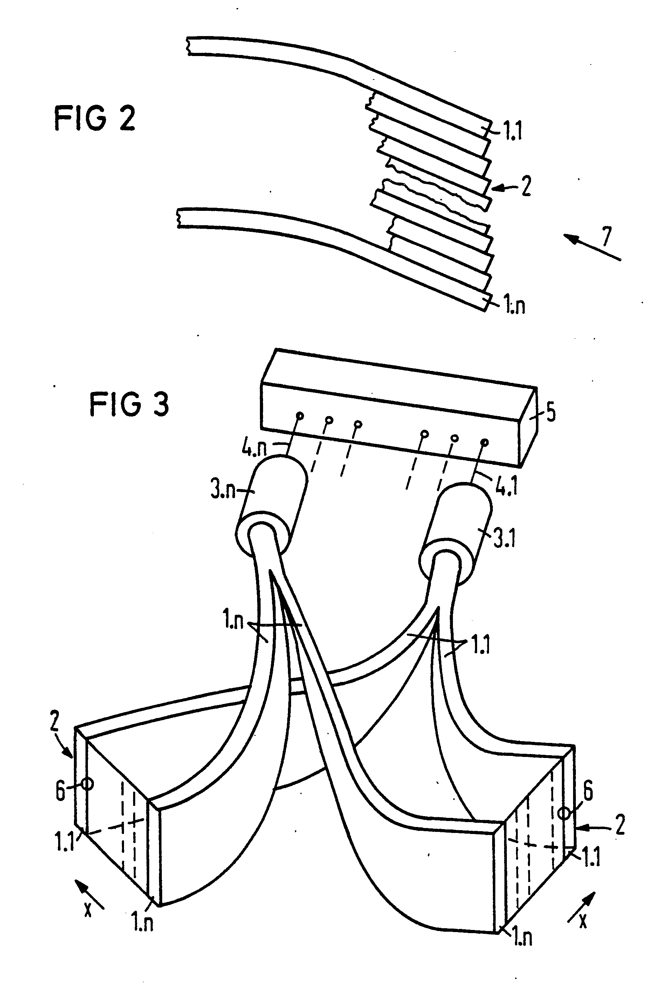

In der Figur 2 ist die Seitenansicht einer Empfängerfläche 2 mit den Lichtleitern 1.1 bis 1.n dargestellt, wobei die treppenartige Ausbildung zur Kompensation des Scheimpflug-Effektes dargestellt wird. Die durch die eingesetzte Optik bei der Triangulation vorbestimmte Richtung 7 des auftreffenden Lichtes ist im wesentlichen nicht variabel, da ansonsten die Abbildung auf der Empfängerfläche 2 teilweise unscharf würde. Somit hat die Hauptausrichtung der Empfängerfläche 2 und die Richtung 7 einen bestimmten vorgegebenen Winkel. Um trotzdem durch senkrechtes Auftreffen des Lichtes auf die Stirnflächen der Lichtleiter 1 eine optimale Einkoppelung zu erzielen, wird die Empfängerfläche 2 des positonsempfindlichen Fotodetektors wie in Fig. 2 gezeigt, treppenförmig ausgebildet.

Die Figur 3 zeigt einen positionsempfindlichen Fotodetektor analog zu der Darstellung in der Fig. 1, wobei jedoch die Empfängerfläche 2 zweifach ausgeführt ist. Die Bezugszeichen entsprechend der Elemente entspricht der Darstellung in der Fig. 1. In der Figur 3 ist zu erkennen, daß sich entsprechende Lichtleiter, beispielsweise 1.1, von beiden vorhandenen Empfängerflächen 2 parallel geschaltet werden und auf einen optoelektronischen Wandler, beispielsweise eine Avalanche-Diode 3.1, gekoppelt werden. Die elektrische Verdrahtung, dargestellt durch die elektrischen Anschlüsse 4.1 bis 4.n geschieht in gleicher Weise wie oben beschrieben. Die Auswerteeinheit 5 bekommt somit parallel die auf den Empfängerflächen 2 gleichzeitig vorhandenen Abbildungen, in Form von ortsaufgelösten elektrischen Signalen übermittelt. Die Ortsauflösung ist eindimensional und auf den Detektor, bzw. die detektorbezogene Koordinatenrichtung X festgelegt.

**Ansprüche**

1. Positionsempfindlicher Fotodetektor zur schnellen Erfassung der ortsbezogenen Intensitätsverteilung von einer auf einer Empfängerfläche (2) erzeugten Abbildung, bestehend aus
- einer Vielzahl von als optische Querschnittswandler (3) ausgebildeten Lichtleitern (1) und
- einer in gleicher Anzahl vorhandenen Menge von optoelektronischen Wandlern (3),

- wobei die Empfängerfläche (2) durch die Stirnflächen der geordnet gebündelten einseitig annähernd rechteckigen Enden der Lichtleiter (1) gebildet wird,

- die entgegengesetzten annähernd runden Enden der Lichtleiter (1) jeweils an entsprechend geordnete optoelektronische Wandler (3) angeschlossen sind und

- die elektrischen Signale der optoelektronischen Wandler (3) zeitgleich an eine Auswerteeinheit (5) übergeben werden.

2. Positionsempfindlicher Fotodetektor nach Anspruch 1,

**dadurch gekennzeichnet,**

daß die Empfängerfläche (2) in Form einer Treppe ausgebildet ist, wobei bei der Bündelung der Lichtleiter (1) deren Stirnflächen gleichmäßig jeweils in gleicher Richtung im Verhältnis zur benachbarten Stirnfläche versetzt sind.

3. Positionsempfindlicher Fotodetektor nach einem der vorhergehenden Ansprüche,

**dadurch gekennzeichnet,**

daß der Fotodetektor aus mindestens zwei Empfängerflächen (2) mit jeweils der gleichen Anzahl von Lichtleitern (1) besteht, wobei durch die jeweilige Parallelschaltung von sich entsprechenden Lichtleitern (1.1 bis 1.n) und deren Ankopplung an einen jeweils zugehörigen optoelektronischen Wandler (3.1 bis 3.n) die Anzahl der vorhandenen optoelektronischen Wandler (3.1 bis 3.n) der Anzahl von Lichtleitern (1.1 bis 1.n) entspricht, wie sie in einer einzigen Empfängerfläche (2) vorhanden ist.

# FIG 1

FIG 2

FIG 3

## EINSCHLÄGIGE DOKUMENTE

EP 90102238.4

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | EP - A2 - 0 141 038 (SUMI TOMO) * Gesamt * -- | 1,3 | G 01 J 1/42 G 02 B 6/06 |
| A | US - A - 3 512 861 (SCHACKERT) * Spalte 1, Zeile 32 - Spalte 2, Zeile 9; Spalte 3, Zeilen 23-28; Fig. 1,3 * -- | 1,3 | |
| A | DE - A1 - 2 427 150 (RUTHENBERG) ---- | | |

RECHERCHIERTE SACHGEBIETE (Int Cl⁵)

G 01 J 1/00
G 02 B 6/00
G 06 K 7/00

Der vorliegende Recherchenbericht wurde für alle Patentansprüche erstellt.

| Recherchenort | Abschlußdatum der Recherche | Prüfer |
|---|---|---|
| WIEN | 23-04-1990 | BAUER |